Europäisches Patentamt

European Patent Office

Office européen des brevets

(11) Veröffentlichungsnummer: **0 176 024**
**A2**

## (12) EUROPÄISCHE PATENTANMELDUNG

(21) Anmeldenummer: 85111765.5

(22) Anmeldetag: 17.09.85

(51) Int. Cl.4: **G02B 6/42**

(30) Priorität: 19.09.84 DE 3434440

(43) Veröffentlichungstag der Anmeldung:
02.04.86 Patentblatt 86/14

(84) Benannte Vertragsstaaten:
AT BE CH DE FR GB IT LI LU NL SE

(71) Anmelder: **Siemens Aktiengesellschaft**
**Berlin und München Wittelsbacherplatz 2**
**D-8000 München 2(DE)**

(72) Erfinder: **Deserno, Ulrich, Dr.phil. Dipl.-Ing.**
**Augustenstrasse 121**
**D-8000 München 40(DE)**

(54) Linsensystem zur Fokussierung einer divergenten Laserstrahlung.

(57) Es wird ein Linsensystem zur Fokussierung einer divergenten Laserstrahlung (10), insbesondere zum Überführen der räumlichen Amplituden- und Phasenverteilung der stark divergenten Laserstrahlung eines Halbleiterlasers in die Amplituden- und Phasenverteilung des in eine Monomodefaser einkoppelbaren Grundmodus beschrieben. Das Linsensystem besteht aus einer Frontlinse in Form eines sammelnden aplanatischen Meniskus (1) und aus einer oder mehreren nachgeordneten brechenden Linsen (2 bis 5) zum Fokussieren der auf der Frontlinse (1) austretenden Laserstrahlung (1). Die dem objektseitigen aberrationsfreien Punkt (0) zugekehrte brechende Frontfläche (11) des Meniskus (1) ist derart gestaltet, daß sie zumindest annähernd die Form einer auf den Meniskus (1) treffenden Phasenfläche der von (0) oder einer Stelle nahe bei diesem Punkt (0) liegenden Stelle ausgehenden divergenten Laserstrahlung (10) aufweist. Dadurch wird diese Frontfläche (11) weitgehend aberrationsfrei. Durch eine minimale Verkippung des Meniskus (1) wird erreicht, daß der von der Frontfläche (11) reflektierte Anteil der divergenten Laserstrahlung (10) neben der Quelle refokussiert wird, wodurch eine stark rückwirkungsfreie Koppeloptik zum Ankoppeln eines Halbleiterlasers an eine Faser ermöglicht ist. Andererseits ist das Linsensystem hervorragend als externer Resonator für einen Halbleiterlaser geeignet. Eine Koppelvorrichtung mit dem Linsensystem und weitere Anwendungsmöglichkeiten sind angegeben.

FIG 2

EP 0 176 024 A2

Linsensystem zur Fokussierung einer divergenten Laserstrahlung

Die vorliegende Erfindung betrifft ein Linsensystem zur Fokussierung einer divergenten Laserstrahlung nach dem Oberbegriff des Patentanspruchs 1.

Beim Aufbau von Halbleiterlasermoduln liegt ein Schlüsselproblem in der optischen Kopplung zwischen der Laserdiode und der anzukoppelnden Monomodefaser. Die Kopplung soll die räumliche Amplituden- und Phasenverteilung der Laserdiodenemission optimal in die Amplituden- und Phasenverteilung des in der Faser geführten Modus transformieren, um einen guten Koppelwirkungsgrad zu erzielen.

Als Koppelanordnungen sind makrooptische und mikrooptische Anordnungen bekannt geworden. Mikrooptische Anordnungen sind beispielsweise die Stoßkopplung zwischen Laser und Faserstirnfläche, die im einfachsten Fall plan ist oder in Form einer Mikrolinse gewölbt ist, wobei das Faserende zusätzlich Taperform haben kann. Anstelle aufgeschmolzener oder angeschmolzener Mikrolinsen können auch Gradientenlinsen eingesetzt werden.

Bei der makrooptischen Kopplung werden ein- oder mehrlinsige Systeme, insbesondere Linsensysteme der eingangs genannten Art benutzt, deren typische Abmessungen groß gegen die Faser oder eines entsprechenden Wellenleiters sind (siehe O. Krumpholz: Wiss. Ber. AEG-Telefunken 48 (1975) S. 90-94 und S. Masuda, T. Iwama: Appl. Opt. 21 (1982) S. 3475-3483). Der einfachste Fall in dieser Kategorie ist die Kopplung mit einer Kugellinse (siehe Sugie u.a.: J. Lightwave Techn. 1 (1983) S. 121-130). Vielfach werden aber auch kondensorartige Linsensysteme der eingangs genannten Art benutzt.

Bei den genannten Koppelanordnungen oder Systemen kann der Koppelwirkungsgrad von 50 % bisher kaum überschritten werden, weil keine von ihnen die starke Divergenz der von den gebräuchlichen Halbleiterlasern gegebenen Laserstrahlung verarbeiten kann (siehe Saruwatari, Sugi: Journ. of Quant. Electr. 17 (1981) S. 1021-1027).

Die Rückwirkung auf den Laserresonator liegt bei diesen bekannten Anordnungen oder Systemen wegen des geringen Abstandes der ersten brechenden Fläche vom Laserspiegel typisch im Promillebereich. Vergütung würde zwar die Rückwirkung mindern, wegen der stark gekrümmten Flächen an anderer Stelle aber die Verluste weiter erhöhen.

Aufgabe der vorliegenden Erfindung ist es, eine Koppeloptik zum Ankoppeln eines Halbleiterlasers an eine Faser, insbesondere eine Monomodefaser anzugeben, mit der sich ein Koppelwirkungsgrad von über 50 % und gleichzeitig eine starke Reduzierung der Rückwirkung auf den Laserresonator erreichen läßt.

Diese Aufgabe wird mit einem Linsensystem der eingangs genannten Art gelöst, welches nach Maßgabe der im kennzeichnenden Teil des Patentanspruchs 1 angegebenen Merkmale gestaltet ist, nach denen die Frontlinse aus einem sammelnden aplanatischen Meniskus zum Kollimieren der von dessen objektseitigem aberrationsfreiem Punkt oder einer wenigstens nahe bei diesem Punkt liegenden Stelle ausgehenden divergenten Laserstrahlung besteht, und die dem objektseitigen aberrationsfreien Punkt zugekehrte brechende Frontfläche des Meniskus derart gestaltet ist, daß sie zumindest annähernd die Form einer auf den Meniskus treffenden Phasenfläche der divergierenden Laserstrahlung aufweist.

Der sammelnde aplanatische Meniskus weist eine sehr hohe aberrationsfreie Eingangsapertur auf, die einen maximalen Koppelwirkungsgrad ermöglicht. Gleichzeitig kann durch die spezielle Gestaltung der brechenden Frontfläche des Meniskus die Rückwirkung auf den Laserresonator stark reduziert werden.

Im vorstehenden und auch im nach folgenden bedeuten "nahe" oder "annähernd" stets "in der Größenordnung von 10 w", wobei w den Durchmesser der divergenten Laserstrahlung an der Stelle bedeutet, von der sie ausgeht. Es kann dabei davon ausgegangen werden, daß w stets um Größenordnungen kleiner ist als der maßgebende Radius R der von dem objektseitigen aberrationsfreien Punkt abgekehrten brechenden Kugelfläche aplanatischen Meniskus.

Unter diesen Gegebenheiten kann auch davon ausgegangen werden, daß die auf den Meniskus treffenden Phasenflächen der divergenten Laserstrahlung sphärische Flächen sind, deren Mittelpunkt zumindest nahe bei der Stelle liegt, von der diese Laserstrahlung ausgeht. Bei der stark divergenten Laserstrahlung eines Halbleiterlasers gilt dies. Eine für diesen Fall besonders geeignete Ausführungsform der Erfindung ist demnach gemäß Anspruch 2 so gestaltet, daß die Frontfläche des Meniskus eine sphärische Fläche ist, deren Mittelpunkt mit dem objektseitigen aberrationsfreien Punkt zusammenfällt oder zumindest nahe bei diesem Punkt liegt. Diese Ausführungsform hat auch den Vorteil, daß sie technisch relativ einfach und mit herkömmlichen Mitteln realisierbar ist.

Die spezielle Gestaltung der Frontfläche des aplanatischen Meniskus in Form der auf den Meniskus treffenden Phasenfläche der divergenten Laserstrahlung bewirkt, daß die Strahlen der divergenten Laserstrahlung zumindest annähernd ungebrochen durch diese Frontfläche hindurchtreten, und daß der von dieser Frontfläche reflektierte Anteil der divergenten Laserstrahlung an der Stelle refokussiert wird, von der sie ausgeht. Gerade die Energiekonzentration im Fokus dieses reflektierten Anteils ist besonders hilfreich für die Verhinderung der Rückwirkung auf den Laserresonator. Dazu genügt es bereits, wenn gemäß Anspruch 4 die Frontfläche des Meniskus relativ zur divergenten Laserstrahlung so 2 angeordnet ist, daß der von der Frontfläche reflektierte Anteil dieser Laserstrahlung seitlich neben der Stelle refokussiert ist, von der die divergente Laserstrahlung ausgeht. In der Praxis reicht es dazu aus, den aplanatischen Meniskus minimal zu verkippen, so daß seine Achse an der genannten Stelle seitlich vorbeiläuft. Um die Rückwirkung auf sehr kleine Werte zu bringen, reicht es aus, den Kippwinkel in der Größenordnung von 10 w/R zu wählen.

Ein erfindungsgemäßes Linsensystem nach Anspruch 4 wird daher vorteilhafterweise und gemäß Anspruch 8 als Koppeloptik zum rückwirkungsfreien Einkoppeln der Laserstrahlung eines Halbleiterlasers in eine Faser verwendet.

Zusammen mit dem Meniskus kann das gesamte Linsensystem minimal verkippt werden, so daß dafür gesorgt ist, daß der konvokale Reflex nicht nur der Frontfläche des Meniskus sondern auch gegebenenfalls weiterer konkaver Flächen des Systems nicht in die Stelle gelangt, von welcher die divergente Laserstrahlung ausgeht, d.h. auf den Laserspiegel des Halbleiterlasers.

Mit einem gemäß Anspruch 8 angewendeten Linsensystem nach Anspruch 4 läßt sich die Rückwirkung des Systems auf den Laserresonator auf Werte unter -60 dB reduzieren, gegenüber -30 - -40 dB bei üblichen Anordnungen mit positiv gekrümmten Flächen. Wegen der hohen aberationsfreien Eingagnsaperturen von beispielsweise 0,6 bis 0,8 können Koppelwirkungsgrade von etwa 80 % realisiert werden, gegenüber 50 % bei einzelnen Mikrolinsen oder herkömmlichen makrooptischen Linsensystemen.

Bei der Anwendung nach Anspruch 8 ist est auch vorteilhaft, gemäß Anspruch 9 so vorzugehen, daß der von der Frontfläche des Meniskus reflektierte Anteil der divergenten Laserstrahlung, der seitlich neben der Stelle refokussiert ist, von der diese Laserstrahlung aus dem Halbleiterlaser austritt, zur Steuerung oder Regelung des Lasers verwendet wird. Der Fokus des von der Frontfläche reflektierten Anteils der Laserstrahlung kann zur Speisung einer kostengünstigen, kleinflächigen Monitorfotodiode verwendet werden, die gegebenenfalls auf dem Träger des Halbleiterlasers angebracht werden kann.

Der aplanatische Meniskus führt bekanntlich die von dem objektseitigen aberrationsfreien Punkt ausgehenden Strahlen der stark divergenten Laserstrahlung frei von sphärischer Aberation und Koma in eine schwach divergente Strahlung über, deren Strahlen dementsprechend genau von einem bildseitigen aberrationsfreien Punkt auszugehen scheinen. Diese schwach divergente Strahlung läßt sich leichter abbildungsfrei verarbeiten als eine stark divergente Strahlung. Die dem Meniskus nachfolgenden brechenden Linsen können mit sphärischen und/oder asphärischen brechenden Flächen ausgeführt sein. Beim Einsatz asphärischer brechender Flächen kann die Zahl dieser Flächen und damit der Verlust des gesamten Linsensystems verringert werden. Eine vorteilhafte Ausführungsform des erfindungsgemäßen Linsensystems ist gemäß Anspruch 5 so gestaltet, daß in dem Linsensystem ein telezentrischer Strahlengang realisiert ist. Diese Ausführungsform eignet sich besonders gut für den Einbau von Zusatzgliedern, beispielsweise von Polarisatoren und Faraday-Drehern zu optischen Isolation ' oder von asphärischen, beispielsweise zylindrischen Linsen zur Astigmatismuskorrektur.

Das erfindungsgemäße Linsensystem weist neben dem guten Koppelwirkungsgrad und der geringen Rückwirkung, die mit ihm erzielbar sind, die Vorteile eines großen Arbeitsabstandes und der modularen Anpassungsfähigkeit an unterschiedliche Aufgabenstellungen auf. Darüber hinaus kommt es nicht nur für Lasermodule in Frage, sondern auch für anderen Anwendungen, auf die im folgenden eingegangen wird.

Eine Ausgestaltung des erfindungsgemäßen Linsensystems ist gemäß Anspruch 4 und im Gegensatz zum System nach Anspruch 3 gerade so ausgebildet, daß die Frontfläche des Meniskus relativ zur divergenten Laserstrahlung so angeordnet ist, daß der von der Frontfläche reflektierte Anteil dieser Laserstrahlung an der Stelle refokussiert ist, von der die divergente Laserstrahlung ausgeht. Bei dieser Ausgestaltung wird somit der reflektierte Anteil in der Quelle der divergenten Laserstrahlung refokussiert, wodurch eine sehr starke Rückwirkung auf die Quelle, beispielsweise einem Halbleiterlaser, gegeben ist. Damit ist diese Ausführungsform nach Anspruch 4 hervorragend als externer Resonator für die Halbleiterlaser geeignet und dementsprechend wird diese Ausgestaltung nach Anspruch 10 als externer optischer Resonator für einen Halbleiterlaser angewendet. Die Frontfläche des Meniskus dient in diesem Fall als Resonatorspiegel, und der Vorteil ist, daß durch das Linsensystem ein Teil der Laserstrahlung ausgekoppelt wird und die ausgekoppelte Strahlung in eine vorzugsweise einmodige Übertragungsfaser mit hohem Wirkungsgrad eingekoppelt werden kann. Die Reflexion an der Frontfläche des Meniskus kann durch eine geeignete optische Beschichtung in gewünschter Weise beeinflußt werden. Es kann damit ein dynamisch einmodiger Laser aufgebaut werden.

Weitere vorteilhafte Anwendungen des erfindungsgemäßen Linsensystems gehen aus den Unteransprüchen 11 bis 15 hervor. Bei der Anwendung nach Anspruch 12 kommt in erster Linie die Messung des gebrochenen Nahfeldes (refracted near field) in Frage. Bei der Anwendung nach Anspruch 15 kann das Linsenssystem vorteilhaft eingesetzt werden, weil es wegen seiner hohen Eingangsapertur und seiner extrem kleinen sphärischen Aberration eine hohe Energiekonzentration beim Fokussieren der zum Schreiben oder Lesen verwendeten Laserstrahlung, und dadurch eine hohe Informationsdichte auf dem optischen Speichermedium von etwa 1 Bit/$\mu$m$^2$ ermöglicht.

Das aus Einzellinsen bestehende erfindungsgemäße Linsensystem wird vorzugsweise als kompakte Baueinheit hergestellt, bei der die Einzellinsen in einer mechanischen Fassung dauerhaft maßhaltig nach Art eines Objektivs oder Kondensors zusammengefaßt sind. Diese kompakte Baueinheit kann in der Fabrik mit entsprechenden Fertigungs- und Prüfmitteln mit klassischen Herstellungsverfahren serienmäßig in Massenproduktion hergestellt werden.

Bei der Anwendung des erfindungsgemäßen Linsensystems zum Ankoppeln eines Halbleiterlasers an eine Faser ist vor allem die Justierung des Linsensystems auf den Halbleiterlaser kritisch. Diese muß mit hoher Präzision erfolgen und in radialer Richtung besser als 0,5 $\mu$m und in axialer Richtung besser als 1 $\mu$m sein. Außerdem muß zur Vermeidung der Rückwirkung auf den Halbleiterlaser die erfindungsgemäße Kippung des Meniskus oder Linsensystems realisiert werden können. Darüber hinaus müssen Kosten, Platzbedarf, Langzeitstabilität und Temperaturempfindlichkeit der mechanischen Elemente einer solchen Vorrichtung auf ein akzeptables Niveau gebracht werden.

Eine Vorrichtung zum Ankoppeln des Halbleiterlasers an eine Faser, insbesondere an eine Monomodefaser, durch ein erfindungsgemäßes Linsensystem, welches die genannten Forderungen weitgehend erfüllt, ist im Anspruch 6 angegeben. Eine vorteilhafte Ausgestaltung dieser Vorrichtung ist im Anspruch 7 angegeben.

Die Erfindung wird anhand der Figuren in der nachfolgenden Beschreibung beispielhaft erläutert. Von den Figuren zeigen:

Figur 1 die Ausführungsform eines aplanatischen Meniskus, der die Frontlinse eines hier beschriebenen Linsensystems bilden kann;

Figur 2 ein komplettes Linsensystem mit einem aplanatischen Meniskus als Frontlinse; und

Figur 3 einen Längsschnitt durch ein Ausführungsbeispiel einer Vorrichtung zum Ankoppeln eines Halbleiterlasers an eine Monomodefaser durch ein hier beschriebenes Linsensystem.

Grundlage eines aplanatischen Meniskus ist die Weierstrasskonstruktion (siehe Matossi: Optik (De Gruyter 1978) S. 58).

Sie besagt für eine Kugel mit dem Radius R aus Material der Brechzahl n, daß alle Strahlen, die von einem objektseitigen Punkt mit dem Abstand R/n vom Kugelmittelpunkt ausgehen, nach der Brechung an der Kugeloberfläche so verlaufen, als ob sie von einem Punkt auf der Geraden durch den objektseitigen Punkt und den Mittelpunkt der Kugel im Abstand R.n vom Kugelmittelpunkt ausgehen würden. Dieser Punkt ist also ein virtuelles Bild des objektseitigen Punktes, und beide Punkte bilden somit aberrationsfreie Punkte. Wesentlich ist, daß bei dieser speziellen Geometrie die Brechung der Kugeloberfläche auch für große Aperturwinkel "aplanatisch", d.h. frei von Aberration und Koma ist. Die Die Divergenz des Primären Strahlenkegels kann somit reduziert werden, ohne Aufhebung der Beugungsbegrenzung. Die Kugel nach Weierstrass ist demnach ein vorteilhaftes Bauelement zur Vorverarbeitung der hohen numerischen Apertur von Halbleiterlasern. Das von dieser Kugel erzeugte schwach divergente Bündel kann mit flachen Linsen weiter kollimiert und schließlich auf die Stirnfläche einer Faser fokussiert werden. Die numerische Apertur von Monomodefasern liegt bei 0,11. Um die Faser fehlerfrei auszuleuchten, muß die Optik mindestens die doppelte Winkelöffnung haben, also 0,22. Auf der Faserseite muß jedoch keine extreme Divergenz verarbeitet werden. Ein entsprechendes Linsensystem kann beispielsweise aus einer Kugel nach Weierstrass als Frontlinse und einer Kugel zur Nachfokussierung bestehen.

Bei Verwendung mehrerer Linsen zur Fokussierung ergeben sich bessere Aberrationswerte. Die Einzellinsen sind dann schwach gekrümmt, so daß problemlos hochwertige Vergütungsschichten aufgebracht werden können. Kugeln nach Weierstrass werden aber in der Praxis nicht als vollständige Kugeln realisiert, weil der objektseitige aberrationsfreie Punkt in der Kugel läge, sondern sie werden bekanntlich als aplanatischer Meniskus in Form eines Abschnitts einer solchen Kugel mit meist planer brechender Anschnittsfläche realisiert, bei dem der objektseitige aberrationsfreie Punkt außerhalb liegt, wobei die brechende Anschnittsfläche die dem objektseitigen aberrationsfreien Punkt zugekehrte brechende Frontfläche des Meniskus bildet.

Die brechende Frontfläche ist im Gegensatz zu der von dem objektseitigen aberrationsfreien Punkt abgekehrten Kugelfläche des Meniskus aber in der Regel nicht aberrationsfrei, insbesondere wenn sie eine plane Fläche ist. Ihr Einfluß wird beispielsweise in der Mikroskopie einfach durch Immersion unwirksam gemacht. Im Fall eines Linsensystems der eingangs genannten Art ist dies jedoch nicht möglich und es muß dafür Sorge getragen werden, daß die brechende Frontfläche keine oder nur vernachläßigbare optische Wirkung hat. Dies wird vorschlagsgemäß dadurch erreicht, daß dieser brechenden Frontfläche die Form einer auf den Meniskus auftreffenden Phasenfläche der von dem objektseitigen aberrationsfreien Punkt ausgehenden divergenten Strahlung gegeben wird. In diesem Fall werden die Phasenflächen der divergenten Lichtwelle beim Durchgang durch die Frontfläche des Meniskus nicht oder nicht wesentlich de formiert. Im geometrischen optischen Bild bedeutet dies, daß Lichtstrahlen der divergenten Laserstrahlung beim Durchgang durch die Frontfläche nicht oder nicht wesentlich gebrochen werden.

Die Phasenfronten der divergenten Laserstrahlung eines Halbleiterlasers sind im Fall des Gauß-Strahls Kugelflächen. Bei nicht Gauß-förmiger Emissionscharakteristik ist die Kugelform eine gute Näherung, zumindest im Fernfeld. Daher ist es zweckmäßig, die brechende Frontfläche des aplanatischen Meniskus in Form einer Kugelfläche auszubilden, deren Mittelpunkt im objektseitigen aberrationsfreien Punkt des Meniskus liegt.

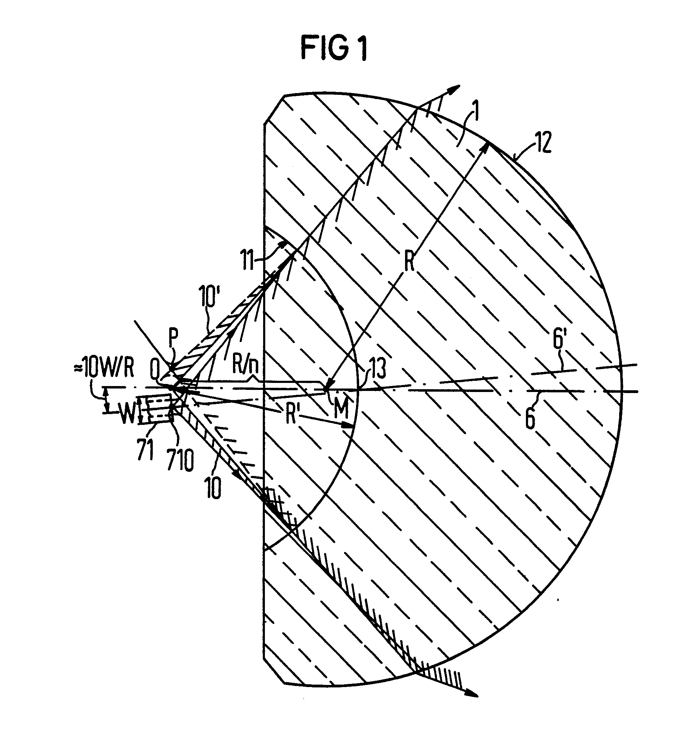

In der Figur 1 ist ein Beispiel eines derartigen und im folgenden stets mit 1 bezeichneten aplanatischen Meniskus im axialen Meridianschnitt dargestellt. Die Brechzahl n des Glases dieses Meniskus sei etwa 2,0 und der Radius R der von dem objektseitigen aberrationsfreien Punkt 0 abgekehrten brechenden Kugelfläche 12 dieses Meniskus 1 sei 1,750 mm. Mit diesen Werten liegt der auf der Achse 6 angeordnete objektseitige aberrationsfreie Punkt 0 in einem Abstand von $R/n = 0,875$ mm vom Mittelpunkt M der Kugelfläche 12 entfernt.

Die diesem objektseitigen aberrationsfreien Punkt 0 zugekehrte brechende Frontfläche 11 des Meniskus 1 ist als Kugelfläche um diesen Punkt 0 ausgebildet, die beispielsweise den Radius $R^1 = 1,067$ mm aufweist.

Divergente Strahlung, die von dem Punkt 0 ausgeht, tritt im wesentlichen ungebrochen durch die Frontfläche 11 hindurch und gelangt zur Kugelfläche 12, wo sie aberrationsfrei gebrochen wird. Der von der Frontfläche 11 zurückreflektierte Anteil der divergenten Strahlung wird im Punkt 0 refokussiert. Wenn also im Punkt 0 der Spiegel dieses Halbleiterlasers angeordnet wird, so wird der von der Fläche 11 zurückreflektierte Anteil der aus dem Laser austretenden divergenten Laserstrahlung in diesem Spiegel refokussiert.

Andererseits genügt eine minimale Verkippung des Meniskus 1, beispielsweise um den Scheitelpunkt 13 der Frontfläche 11, um den Fokus des zurückreflektierten Anteils der divergenten Strahlung außerhalb der Quelle anzuordnen, wodurch sich eine extrem hohe Rückwirkungsfreiheit ergibt.

In der Figur 1 ist der letztgenannte Fall schematisch dargestellt. Der Halbleiterlaser 71 strahlt seine stark divergente Laserstrahlung 10 in Richtung der Achse 6' ab, auf welcher der Meniskus 1 so angeordnet ist, daß die Achse 6' den genannten Scheitelpunkt 13 schneidet. Der Meniskus 1 ist um diesen Scheitelpunkt 13 gegenüber der Achse 6' etwas verkippt, so daß die Achse 6 des Meniskus 1 selbst mit der Achse 6' einen im Bogenmaß gemessenen Winkel von etwa 10 w/R einschließt. w entspricht dabei dem Durchmesser der stark divergenten Laserstrahlung 10 am Ort der Quelle, d.h. am Spiegel 710 des Halbleiterlasers 71. In der Figur 1 ist dieser Durchmesser stark übertrieben groß dargestellt. In der Praxis ist er um mehrere Größenordnungen kleiner als der Radius R' der sphärischen Frontfläche 11. Die minimale Verkippung bewirkt, daß der von der Frontfläche 11 reflektierte Anteil 10' der divergenten Laserstrahlung 10 in einem Punkt P seitlich neben der Quelle der divergenten Laserstrahlung 10 bei 710 refokussiert wird. Wie schon angedeutet, sind die Verhältnisse in der Figur 1 stark übertrieben eingezeichnet. In der Praxis ist der Verkippungswinkel für das Auge kaum sichtbar. Sowohl die Quelle der divergenten Strahlung 10 als auch der Punkt P werden dicht am objektseitigen aberrationsfreien Punkt 0 des Meniskus 1 angeordnet sein.

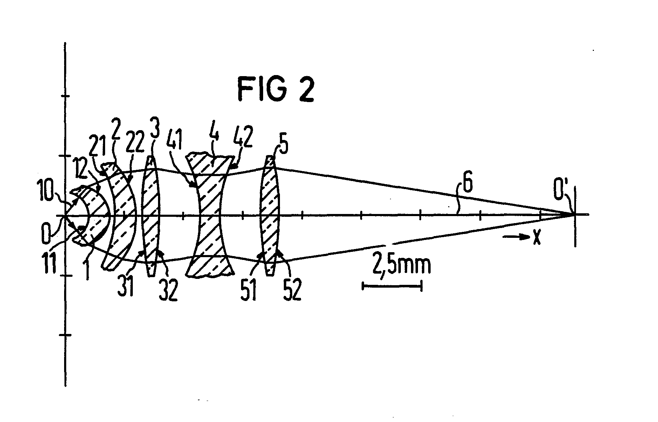

Die Figur 2 zeigt ein berechnetes Ausführungsbeispiel eines kompletten Linsensystems mit einem aplanatischen Meniskus 1 als Frontlinse, dessen Abmessungen aber nicht mit den speziellen Abmessungen des Meniskus 1 nach Figur 1 übereinstimmen. Die dem Meniskus 1 nachgeordneten brechenden Linsen 2 bis 5 dieses Systems bestehen der Reihe nach aus einem dem Meniskus 1 unmittelbar nachgeordneten zweiten sammelnden aplanatischen Meniskus 2, einer diesem nachgeordneten bikonvexen Linse 3, einer dieser nachgeordneten bikonkaven Zerstreuungslinse 4 und schließlich einer dieser nachgeordneten bikonvexen Linse 5. Die nachfolgende Tabelle gibt die genauen Abmessungen dieses Systems an, wobei die x-Position den Abstand des Scheitelpunktes der betreffenden brechenden Linsenfläche von dem objektseitigen aberrationsfreien Punkt 0 des Meniskus 1 in Richtung der Achse 6 des Systems angibt. Die Krümmungsmittelpunkte sämtlicher brechender Flächen liegen auf dieser Achse 6. Ein negativer Radius bedeutet, daß der Krümmungsmittelpunkt der betreffenden brechenden Fläche 12 in der Figur 2 links von dieser Fläche liegt. Eine positive Radiusangabe bedeutet, daß der Krümmungsmittelpunkt der betreffenden brechenden Fläche rechts von dieser Fläche liegt.

| Linse in Fig.2 | brechende Fläche in Fig.2 | x-Position [mm] | Radius der brechenden Fläche [mm] | Brechzahl der Linse |
|---|---|---|---|---|
| 1 | 11 | 1 | -1 | 2 |
|   | 12 | 1,875 | -1,25 |   |
| 2 | 21 | 2,125 | -4 | 2 |
|   | 22 | 3 | -3,00825 |   |
| 3 | 31 | 3,25 | 11,9105 | 2 |
|   | 32 | 4 | -11,9105 |   |
| 4 | 41 | 5,75 | -4,95 | 1,5 |
|   | 42 | 6,5 | 4,95 |   |
| 5 | 51 | 8,25 | 11,9105 | 2 |
|   | 52 | 9 | -11,9105 |   |

Das Medium zwischen den Linsen 1 bis 5 ist Luft mit der Brechzahl 1.

In der Figur 2 ist auch der Strahlengang der von dem objektsseitigen aberrationsfreien Punkt 0 des Meniskus 1 oder nahe von diesem Punkt ausgehenden stark divergenten Laserstrahlung 10 eingezeichnet, die in einem Punkt 0' auf oder sehr nahe bei der Achse 6 weitgehend frei von sphärischer Aberrations und Koma fokussiert wird. Das ganze Linsensystem nach Figur 2 weist eine Brennweite von 3,004327 mm, eine Vergrößerung von -4,957206 auf und der paraxiale Bildpunkt 0' liegt bei der x-Position 21,47706 mm. Der Krümmungsmittelpunkt der Frontfläche 11 des Meniskus 1 fällt wieder mit dessen objektseitigem aberrationsfreiem Punkt 0 zusammen.

Eine minimale Verkippung des Meniskus 1 relativ zur Achse 6' der stark divergenten Laserstrahlung 10 kann so vorgenommen werden, daß das ganze System oder nur der Meniskus 1 allein minimal verkippt wird.

Hinsichtlich der Gestaltung der dem Meniskus nachgeordneten brechenden Linsen besteht viel Freiheit. Sie können dem einzelnen Anwendungsfall entsprechend ausgelegt werden. Im einfachsten Fall genügt ein aplanatischer Meniskus und eine nachgeordnete sphärische Einzellinse. Diese Linse ist dann vorzugsweise so ausgeführt, daß die Strahlen parallel im Inneren der Linse verlaufen.

Die nachgeordnete Einzellinse kann auch durch zwei Linsen ersetzt werden, die so ausgestaltet sind, daß der parallele Strahlengang vorhanden ist, aber außerhalb der Linsen liegt. In den parallelen Strahlengang können dann weitere Elemente eingeschaltet werden, wie beispielsweise ein Element eines optischen Isolators.

Auch kann das ganze System ausgangsseitig auch einen weiteren aplanatischen Meniskus aufweisen.

Die Winkeldivergenz, die jene Linsen verarbeiten müssen, die der Frontlinse nachgeordnet sind, kann nochmals reduziert werden, wenn zwischen diesen nachgeordneten Linsen und der Frontlinse ein zusätzlicher aplanatischer Meniskus geschaltet wird, wie dies bei dem Linsensystem nach Figur 2 der Fall ist.

Günstig ist es in jedem Fall, die nachgeordneten Linsen so auszugestalten, daß der Strahlengang zwischen den Einzellinsen telezentrisch verläuft, d.h. daß ebene Wellenfronten vorhanden sind, wodurch der Abstand zwischen solchen Linsen ohne wesentliche Störung des Strahlengangs geändert werden kann. Diese Art der Strahlführung ist deshalb günstig, weil zusätzliche Bauelemente, wie beispielsweise Zylinderlinsen, zur Astigmatismuskorrektur oder, wie schon erwähnt, ein optischer Isolator eingefügt werden können.

Der optische Isolator kann in diesem Fall die Form einer Platte oder eines kurzen Zylinders mit planen Endflächen haben. Kommt es dagegen auf die möglichst kleine Zahl von Einzelelementen an, kann eine Bauform mit einzelner, symmetrisch durchstrahlter Zwischenlinse aus magnetooptischem Material verwendet werden und/oder mehrere sphärische Elemente können durch asphärische Elemente ersetzt werden.

Je mehr Linsen das Linsensystem enthält, desto besser kann die sphärische Aberration korrigert werden. Das System kann hinsichtlich der Form, Lage und Brechkraft der einzelnen Linsen noch weiter optimiert werden, wenn seine Linsen, insbesondere auch seine Zwischenlinsen aus höherbrechendem Material gefertigt werden. So kommen für Betriebswellenlängen im 1,3 bis 1,6 μm-Bereich Materialien wie Si, Rutil und Chalkogenidgläser in Frage, die einen Brechungsindex zwischen 2 und 3,5 aufweisen. Ein weiterer Vorteil dieser Materialien ist, daß sie mit sehr hochwertigen Vergütungen versehen werden können.

Bei sorgfältiger Fertigung und Vergütung können bei hinreichend gut korrigierter sphärischer Aberration Einfügeverluste von 1 dB und darunter erhalten werden.

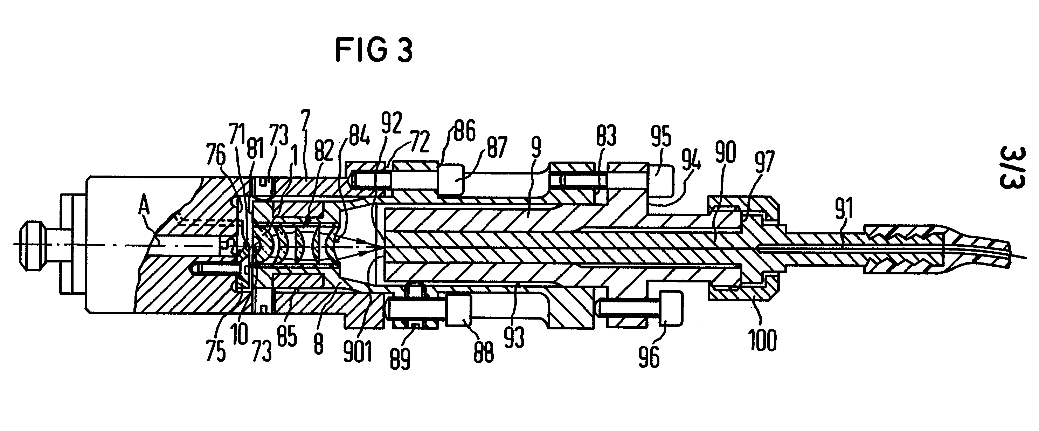

In der Figur 3 ist ein Ausführungsbeispiel einer Vorrichtung zum Ankoppeln eines Halbleiterlasers 71 an eine Monomodefaser 91 durch ein hier vorgeschlagenes Linsensystem 82 im axialen Längsschnitt dargestellt. Die Vorrichtung weist eine Steckbuchse 7 auf, in deren Innerem der Halbleiterlaser 71 etwa auf der Achse A der Steckbuchse 7 angeordnet und fixiert ist. Die Fixierung erfolgt beispielsweise so, daß der Halbleiterlaser 71 und gegebenenfalls eine nicht dargestellte Regel- oder Monitordiode auf einem Träger 75 befestigt sind, der an eine radial einwärts ragende Schulter 76 oder einen Boden der Steckbuchse 7 geschraubt wird. Der Halbleiterlaser 71 wird etwa auf der Achse A so angeordnet, daß er in Richtung dieser Achse A zum offenen Ende 72 der Steckbuchse 7 hin abstrahlt. Durch dieses offene Ende 72 ist eine sowohl als Stecker als auch als Steckbuchse fungierende Steckerbuchse 8 mit einem Ende 81 voran in die Steckbuchse 7 axial eingesteckt. An diesem Ende 81 ist das innerhalb der Steckerbuchse 8 fixierte Linsensystem 82 so angeordnet und fixiert, daß dessen Frontlinse in Form des aplanatischen Meniskus 1 dem Halbleiterlaser 71 gegenüberliegt.

Das Linsensystem 72 ist beispielsweise ein 5-linsiges System, das als kompakte Baueinheit in Form eines Minikondensors ausgebildet ist, der als solcher in der Steckerbuchse 8 fixiert ist.

In die Steckerbuchse 8 ist von deren offenem anderen Ende 83 her eine beidseitig offene Präzisionssteckbuchse 9 axial eingesteckt. In diese ist wiederum ein die Faser 91 enthaltender Präzisionsstecker 90 mit einem vorausgehenden Ende 901 axial eingesteckt, das der Ausgangsseite 84 des Linsensystems 82 gegenüberliegt, und in dem die Stirnfläche 92 der Faser 91 freiliegt.

Zur genauen Justierung des Spiegels des Halbleiterlasers 71 in den objektseitigen aplanatischen Punkt des Meniskus 1 des Linsensystems 82 sind Justierschrauben vorgesehen, die eine Justierung des Linsensystems 82 sowohl in radialer als auch in axialer Richtung der Steckbuchse 7 ermöglichen.

Die Justierung des Linsensystems 82 in radialer Richtung relativ zur Steckbuchse 7 erfolgt durch mehrere gleichmäßig über den Umfang dieser Steckbuchse 7 verteilte und durch die Wandung dieser Buchse 7 eingeschraubte radiale Stellschrauben 73, die am äußeren Umfang 85 der Steckerbuchse 8 angreifen und mit denen das eine Ende 81 der Steckerbuchse 8 radial einstellbar ist.

Die Einstellung des Linsensystems 82 in axialer Richtung relativ zur Steckbuchse 7 erfolgt durch mehrere axiale Schrauben 87, 88, die eine durch einen an der Steckerbuchse 8 ausgebildeten und die Schulter 86 definierenden radial auswärts ragenden Flansch durchragen und am offenen Ende 72 der Steckbuchse 7 angreifen. Eine Hälfte der mehreren axialen Schrauben 87, 88, die Schrauben 87, sind als gleichmäßig über dem Umfang der Steckerbuchse 8 verteilte Spannschrauben ausgebildet, die nicht nur die relative axiale Einstellung zwischen der Steckbuchse 7 und der Steckerbuchse 8 ermöglichen, sondern diese beiden Teile auch axial zusammenspannen. Die ebenfalls gleichmäßig über dem Umfang der Steckerbuchse 8 verteilten anderen axialen Schrauben 88 sind als Konterschrauben zu den Spannschrauben 87 ausgebildet, die eine bessere Fixierung der axialen Einstellung der Steckerbuchse 8 relativ zur Steckbuchse 7 ermöglichen.

Auf ähnliche Weise kann die freiliegende Stirnfläche 92 der Faser 91 in radialer und axialer Richtung auf den Fokus des Linsensystems 82 eingestellt werden. Zur radialen Einstellung sind mehrere gleichmäßig über dem Umfang der Steckerbuchse 8 verteilte und in deren Wandung eingeschraube radiale Stellschrauben 89 vorgesehen, die am äußeren Umfang 93 der Präzisionssteckbuchse 9 angreifen. Zur axialen Einstellung sind mehrere axiale Schrauben 95, 96 vorgesehen, die einen an der Präzisionssteckbuchse 9 ausgebildeten und die Schulter 94 definierenden radial auswärts ragenden Flansch durchragen und am offenen anderen Ende 83 der Steckerbuchse 8 angreifen. Eine Hälfte der mehreren axialen Schrauben 95, 96, die Schrauben 95, sind ähnlich wie vorher als gleichmäßig über dem Umfang der Präzisionssteckbuchse 9 verteilte Spannschrauben und die übrigen axialen Schrauben 96 als gleichmäßig über dem Umfang verteilte Konterschrauben zu den Spannschrauben 95 ausgebildet.

Für jede radiale Einstellung genügen beispielsweise jeweils drei radiale Einstellschrauben und ebenso für jede axiale Einstellung jeweils sechs axiale Schrauben, drei axiale Spann- und drei axiale Konterschrauben.

Der Präzisionsstecker 90 wird zweckmäßigerweise mittels einer Überwurfmutter 100 am äußeren Ende 97 der Präzisionssteckbuchse 9 fixiert, so daß insgesamt eine kompakte und feste Vorrichtung gegeben ist, die beispielsweise noch mit einer thermischen Schutzhülle umgeben werden kann. Sie kann auch mit Elementen zur Temperaturregelung ergänzt werden, beispielsweise mit Peltierkühlelementen und einer thermischen Schutzhülle.

Die Steckbuchse 7 und die Präzisionssteckvorrichtung mit der Präzisionssteckbuchse 9 und dem Präzisionsstecker 90 können durch im Handel erhältliche Bauelemente, gegebenenfalls nach geringen Modifikationen, realisiert werden. Die einzigen hinzukommenden Elemente sind die Steckerbuchse 8 und die radialen und axialen Schrauben 73, 89, 87, 88, 95, 96.

**Ansprüche**

1. Linsensystem zur Fokussierung einer divergenten Laserstrahlung (10), insbesondere zum Überführen der räumlichen Amplituden- und Phasenverteilung der stark divergenten Laserstrahlung eines Halbleiterlasers in die Amplituden- und Phasenverteilung des in eine Faser, insbesondere eine Monomodefaser, einkoppelbaren und darin geführten Grundmodus, bestehend aus einer in der divergenten Laserstrahlung anzuordnenden brechenden Frontlinse und aus einer oder mehreren nachgeordneten brechenden Linsen (2 bis 5) zum Fokusieren der aus der Frontlinse (1) austretenden Laserstrahlung (10), **dadurch gekennzeichnet,** daß die Frontlinse (1) aus einem sammelnden aplanatischen Meniskus zum Kollimieren der von dessen objektseitigem aberrationsfreiem Punkt (0) oder einer wenigstens nahe bei diesem Punkt (0) liegenden Stelle ausgehenden divergenten Laserstrahlung (10) besteht, und daß die dem objektseitigen aberrationsfreien Punkt (0) zugekehrte brechende Frontfläche (11) des Meniskus (1) derart gestaltet ist, daß sie zumindest annähernd die Form einer auf den Meniskus (1) treffenden Phasenfläche der divergenten Laserstrahlung (10) aufweist.

2. System nach Anspruch 1 oder 2, dadurch **gekennzeichnet,** daß die Frontfläche (11) des Meniskus (1) eine sphärische Fläche ist, deren Mittelpunkt mit dem objektseitigen aberrationsfreien Punkt (0) zusammenfällt oder zumindest nahe bei diesem Punkt (0) liegt.

3. System nach Anspruch 1 oder 2, **dadurch gekennzeichnet,** daß die Frontfläche (11) des Meniskus (1) relativ zur divergenten Laserstrahlung (10) so angeordnet ist, daß der von der Frontfläche (11) reflektierte Anteil dieser Laserstrahlung (10) seitlich neben der Stelle refokussiert ist, von der die divergente Laserstrahlung (10) ausgeht.

4. System nach Anspruch 1 oder 2, **dadurch gekennzeichnet,** daß die Frontfläche (11) des Meniskus (1) relativ zur divergenten laserstrahlung (10) so angeordnet ist, daß der von der Frontfläche (11) reflektierte Anteil dieser Laserstrahlung (10) an der Stelle refokussiert ist, von der die divergente Laserstrahlung (10) ausgeht.

5. Linsensystem nach einem der vorhergehenden Ansprüche, **dadurch gekennzeichnet,** daß in dem System ein telezentrischer Strahlengang realisiert ist.

6. Vorrichtung zum Ankoppeln eines Halbleiterlasers an eine Faser, insbesondere eine Monomodefaser, durch ein Linsensystem nach einem der vorhergehenden Ansprüche, **gekennzeichnet durch** eine Steckbuchse (7), in deren Innerem der Halbleiterlaser (71) fixiert ist, der in Richtung eines offenen Endes (72) der Steckbuchse (7) abstrahlt, durch das eine Steckerbuchse (8) mit einem Ende (81) einsteckbar ist, an dem das Linsensystem (82) so angeordnet ist, daß dessen aplanatischer Meniskus (1) dem Halbleiterlaser (71) gegenüberliegt, und in die vom offnen anderen Ende (83) her eine beidseitig offene Präzisionssteckbuchse (9) einsteckbar ist, die einen eine Faser (91) enthaltenden Präzisionsstecker (90) mit einem vorausgehenden Ende (901) aufnimmt, das der Ausgangsseite (24) des Linsensystems (82) gegenüberliegt und in dem die Stirnfläche (92) der Faser (91) freiliegt, wobei das eine Ende (81) der Steckerbuchse (8) durch in die Wandung der Steckbuchse (7) eingeschraubte und am äußeren Umfang (85) der Steckerbuchse (8) angreifende radiale Stellschrauben (73) in radialer Richtung und durch eine Schulter (86) der Steckerbuchse (8) durchragende und an dem offenen Ende (72) der Steckbuchse (7) angreifende axiale Schrauben (87, 88) in axialer Richtung relativ zum Halbleiterlaser (71) justierbar ist, und wobei die freiliegende Stirnfläche (92) der Faser (91) durch in die Wandung der Steckerbuchse (8) eingeschraubte und am äußeren Umfang (93) der Präzisionssteckbuchse (9) angreifende radiale Stellschrauben (89) in radialer Richtung und durch eine Schulter (94) der Präzisionssteckbuchse (9) durchragende und am anderen Ende (83) der Steckerbuchse (8) angreifende axiale Schrauben (95, 96) in axialer Richtung relativ zum Linsensystem (82) justierbar ist.

7. Vorrichtung nach Anspruch 6, **dadurch gekennzeichnet,** daß ein Teil der axialen Schrauben (86, 87· 96, 97) Spannschrauben zum axialen Zusammenspannen der ersten Steckbuchse (7) mit der Steckerbuchse (8) und/oder der Steckerbuchse (8) mit der Präzisionssteckbuchse bilden, während die übrigen axialen Schrauben Konterschrauben zu den Spannschrauben bilden.

8. Anwendung eines Linsensystems nach Anspruch 3 als Koppeloptik zum Einkoppeln der Laserstrahlung eines Halbleiterlasers mit geringer Rückwirkung in eine Faser.

9. Anwendung nach Anspruch 8, wobei der von der Frontfläche des Meniskus reflektierte Anteil der divergenten Laserstrahlung, der seitlich neben der Stelle refokussiert ist, von der diese Laserstrahlung aus dem Halbleiterlaser austritt, zu Steuerung oder Regelung der Leistung des Lasers verwendet wird.

10. Anwendung eines Linsensystems nach Anspruch 4 als externer optischer Resonator für einen Halbleiterlaser.

11. Anwendung eines Linsensystems nach einem der vorhergehenden Ansprüche zur Präzisionseinkopplung in Lichtleitfasern für Meßzwecke.

12. Anwendung eines Linsensystems nach einem der vorhergehenden Ansprüche zur Profilmessung an Fasern mit höchster Ortsauflösung.

13. Anwendung eines Linsensystems nach einem der vorhergehenden Ansprüche für die Messung an Halbleiterlasern zur Erfassung der Gesamtstrahlung.

14. Anwendung eines Linsensystems nach einem der vorhergehenden Ansprüche zur Ein- und Auskopplung von Lichtstrahlung bei Faserramanlasern.

15. Anwendung eines linsensystems nach einem der vorhergehenden Ansprüche zum Einschreiben und Auslesen von Information in oder aus einem optischen Speicher.

FIG 1

FIG 2

FIG 3